Europäisches Patentamt

(19) European Patent Office

Office européen des brevets

(11) Publication number: **0 254 689**
**B1**

(12) **EUROPEAN PATENT SPECIFICATION**

(45) Date of publication of the patent specification:
**31.10.90**

(21) Application number: **87830264.5**

(22) Date of filing: **09.07.87**

(51) Int. Cl.⁵: **B62D 33/06**

(54) **Commercial vehicle cab with an upper open space.**

(30) Priority: **16.07.86  IT 5363586 U**

(43) Date of publication of application:
**27.01.88 Bulletin 88/4**

(45) Publication of the grant of the patent:
**31.10.90 Bulletin 90/44**

(84) Designated Contracting States:
**DE FR GB NL SE**

(56) References cited:
**EP-A- 0 029 880**
**DE-U- 7 933 148**
**FR-A- 1 505 089**

**EUROPLASTICS MONTHLY, vol. 46, no. 4, April 1973, pages 71-75; W.S. SMITH et al.: "Plastics bodywork for truck cabs"**
**DESIGN ENGINEERING, no. 2, February 1982, page 22, London, GB; "Integrated components reduce redundancy and weight in truck cab"**

(73) Proprietor: **IVECO FIAT S.p.A., Via Puglia 35, I-10156 Torino(IT)**

(72) Inventor: **Savio, Piero, Via Boito 1, I-10040 Borgaretto (Torino)(IT)**

(74) Representative: **Buzzi, Franco et al, c/o Jacobacci-Casetta & Perani S.p.A. Via Alfieri, 17, I-10121 Torino(IT)**

## Description

The present invention relates to cabs for commercial vehicles, of the type including a metal structure within which the functional equipment and internal finishing and furnishing components of the cab are inserted.

Conventionally, such cabs for commercial vehicles are made by first completing the entire metal structure with all its parts and then, after the metal structure has been treated with corrosion-proofing substances applied by immersion techniques, preparing the interior by the assembly of various pieces of functional equipment and furnishing and finishing components which are introduced into the metal structure, usually through the apertures for the side doors of the cab.

This involves considerable difficulty both in connection with the operations of immersion in the proofing baths, since air bubbles can be generated within the metal structure during the immersion and may prejudice the effectiveness of the proofing treatment, and with the subsequent assembly of the various pieces of equipment and internal components. In fact, the side apertures of the metal structure are rather narrow so that the insertion of the equipment and internal components is often difficult and usually requires considerable human assistance, precluding the use of robotised assembly techniques.

The object of the present invention is to avoid this disadvantage and this object is achieved by means of a commercial vehicle cab of the type defined at the beginning, characterised in that the metal structure has an upper open space for allowing the functional equipment and internal finishing and furnishing components of the cab to be introduced from above and to be assembled by automated techniques, the edge of the open space being arranged for the fixing of a roof panel which is intended to be fitted after the introduction and assembly of the equipment and internal components, in order to complete the cab.

The presence of the upper open space also facilitates the proofing treatments by immersion of the metal structure before the introduction and assembly of the equipment and internal components, and renders them more effective since it eliminates the risk of air bubbles forming in the metal structure.

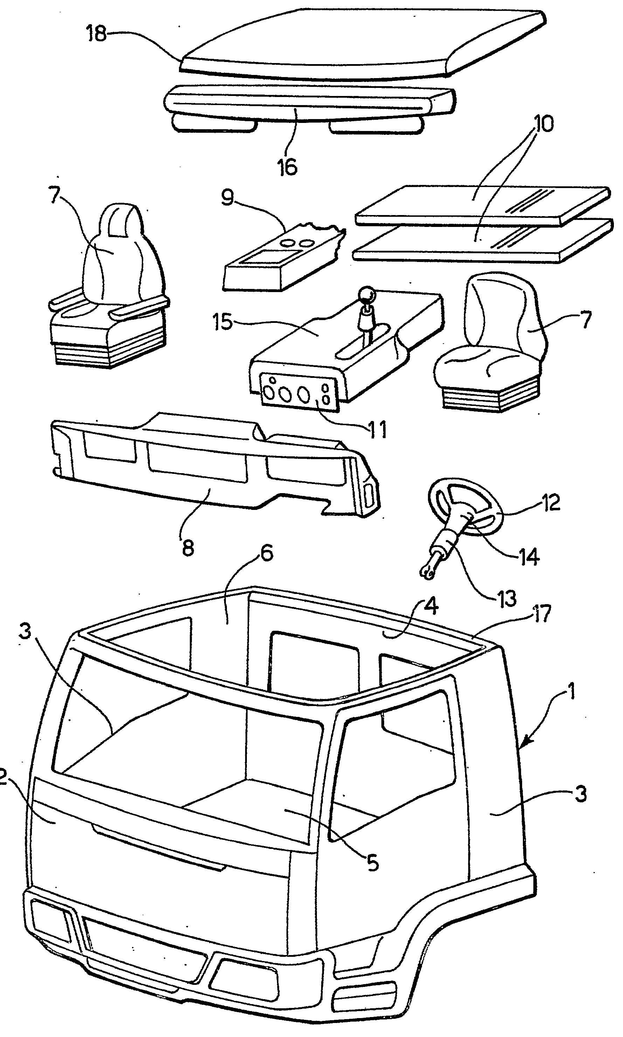

The invention will now be described in detail with reference to the appended drawing, provided purely by way of non-limiting example, which is a schematic exploded perspective view of a commercial vehicle cab according to the invention.

With reference to the drawing, the cab according to the invention comprises a metal structure, generally indicated l, with a front wall 2, two side walls 3, a rear wall 4, and a base wall 5. According to the invention, the metal structure l is incomplete, in that it differs from the structures of conventional cabs in having an open upper space 6. This open space 6 is provided to enable the functional equipment and internal finishing and furnishing components of the cab to be introduced from above and to be assembled by automated techniques. The equipment and internal components include, for example, the seats 7, the dashboard 8, a compartment 9 for carrying loose objects, bunks l0, instruments ll, the steering wheel l2 with its steering column l3 and control units l4, the gearbox l5, and furnishing parts l6.

In addition, the upper open space 6 enables the metal structure l to be treated with corrosion-proofing substances applied by conventional immersion techniques before the introduction and assembly of the various pieces of equipment and components listed above, avoiding the risk of air bubbles forming within the structure l which could reduce the effectiveness of the treatment.

The edge of the upper open space 6, indicated l7, is arranged to receive a roof panel l8 of sheet metal or plastics material, in order to complete the cab. The roof panel l8 is fixed to the edge l7 of the upper space 6 by glueing or like systems after the introduction and assembly of the pieces of equipment and internal components.

Naturally, the scope of the present invention extends to models which achieve equal utility by using the same innovative concept.

## Claims

l. Cab for commercial vehicles, including a metal structure within which the functional equipment and internal finishing and furnishing components of the cab are inserted, characterised in that the metal structure (l) has an upper open space (6) for allowing the functional equipment and internal finishing and furnishing components (7 - l6) of the cab to be introduced from above and to be assembled by automated techniques, the peripheral edge (l7) of the open space (6) being arranged for the fixing of a roof panel (l8) which is intended to be fitted after the introduction and assembly of the equipment and internal components (7-l6), in order to complete the cab.

2. Cab according to Claim l, characterised in that the metal structure (l) is treated with corrosion-proofing substances applied by conventional immersion methods before the introduction and assembly of the equipment and internal components (7-l6).

## Patentansprüche

1. Kabine für Nutzfahrzeuge, mit einer Metallkonstruktion, innerhalb welcher die funktionellen Ausstattungs- und Inneninstallations- und -einrichtungskomponenten der Kabine eingesetzt sind, dadurch gekennzeichnet, daß die Metallkonstruktion (1) einen oberen offenen Raum (6) aufweist, um zu ermöglichen, daß die funktionellen Ausstattungs- und Inneninstallations- und -einrichtungskomponenten (7–16) der Kabine von oben einsetzbar und mittels automatisierter Technik zusammensetzbar sind, wobei der periphere Rand (17) des offenen Raumes (6) zur Befestigung einer Dachplatte (18) eingerichtet ist, die dazu vorgesehen ist, nach dem Einbringen und dem Zusammensetzen der Ausstattungs- und Innenkomponenten (7–16) eingesetzt zu werden, um die Kabine zu vollenden.

2. Kabine nach Anspruch 1, dadurch gekennzeichnet, daß die Metallkonstruktion (1) vor dem Einbringen und Zusammensetzen der Ausstattungs- und Innenkomponenten (7–16) mit durch herkömmliche Tauchmethoden aufgebrachten korrosionsbeständigen Substanzen behandelt ist.

## Revendications

1. Cabine de véhicule commercial, comprenant une structure en métal à l'intérieur de laquelle sont insérés l'équipement fonctionnel et les composants d'ameublement et de finition de la cabine, caractérisée en ce que la structure en métal (1) comporte un espace supérieur ouvert (6) pour permettre à l'équipement fonctionnel et aux composants d'ameublement et de finition internes (7 à 16) de la cabine d'être introduits par le dessus, et assemblés par des techniques automatisées, le bord périphérique (17) de l'espace ouvert (6) ayant été agencé pour la fixation d'un panneau de toit (18) qui est déstiné à être monté après l'introduction et l'assemblage de l'équipement et des composants intérieurs (7 à 16), afin de compléter la cabine.

2. Cabine selon la revendication 1, caractérisée en ce que la structure en métal (1) est traitée avec des substances anti-corrosion appliquées par des méthodes d'immersion classiques avant l'introduction et l'assemblage de l'équipement et des composants intérieurs (7 à 16).